# EUROPEAN PATENT SPECIFICATION

(11) **EP 4 550 760 B1**
(45) Date of publication and mention of the grant of the patent: **04.11.2026**
(21) Application number: 24823506.1
(22) Date of filing: 05.02.2024
(51) Int. Cl.: H04L 69/08, H01M 10/42, H04L 69/18, H02J 3/32, H04L 12/40

(54) **DATA SYNCHRONIZATION APPARATUS AND METHOD**
DATENSYNCHRONISATIONSVORRICHTUNG UND -VERFAHREN
APPAREIL ET PROCÉDÉ DE SYNCHRONISATION DE DONNÉES

(30) Priority: 13.06.2023 KR 20230075260
(43) Date of publication of application: 07.05.2025
(73) Proprietor: LG Energy Solution, Ltd., Seoul 07335 (KR)
(72) Inventor: SON, Jaehyeong, Daejeon 34122 (KR)
(74) Representative: Plasseraud IP
(86) International application number: PCT/KR2024/001638
(87) International publication number: WO 2024/257984

(56) References cited:
- KR-A- 20170 092 743
- KR-A- 20230 055 446
- KR-A- 20230 071 729
- KR-A- 20230 071 729
- KR-B1- 101 825 677
- KR-B1- 102 188 723
- US-A1- 2014 035 365
- US-A1- 2020 064 786
- US-A1- 2020 064 786

## Description

### [Cross Reference to Related Application]

This application claims priority to and the benefit of Korean Patent Application No. 10-2023-0075260 filed in the Korean Intellectual Property Office on June 13, 2023.

### [Technical Field]

The present invention relates to an apparatus and method for synchronizing data, and more particularly, to an apparatus and method for synchronizing data between a battery management system and an upper-level controller.

### [Background Art]

An energy storage system relates to renewable energy, a battery that stores electric power, and a power grid. Recently, as a spread of smart grid and renewable energy is expanding and efficiency and stability of the power system are emphasized, a demand for energy storage systems for power supply and demand control and power quality improvement is increasing. Depending on a purpose of use, energy storage systems may have different outputs and capacities. In order to configure a large-capacity energy storage system, a plurality of battery systems may be connected.

A battery module or battery pack that constitutes a battery system has a structure in which multiple battery cells are combined. In case that some of the battery cells experience overvoltage, overcurrent, or overheating, problems may occur in the safety and operating efficiency of the battery module or battery pack, and thus, a means to detect them is essential. Therefore, the battery module or battery pack is usually equipped with a battery management system (BMS) that measures a voltage value of each battery cell, monitors and controls voltage status of the battery cells based on the measured values.

The battery management system operates in connection with other components, such as an inverter, and periodically monitors battery status-related data and transmits it to an upper-level controller, such as the inverter. However, if the BMS receives a request for battery-related data from the inverter while data to be transmitted in the corresponding cycle is not defined yet, the BMS transmits battery-related data defined in a previous cycle to the inverter. Accordingly, a data desynchronization problem may occur where the data held by the BMS and the data held by the inverter do not match.

Examples of prior art are documents US 2014/035365 A1, US 2020/064786 A1, KR 2023 0071729 A and KR 101 825 677 B1.

### [Detailed Description of the Invention]

### [Technical Problem]

In order to achieve the objective of the present disclosure, embodiments of the present invention provide a data synchronization apparatus that matches data held by the battery management system with data held by an upper-level controller.

According to another embodiment of the present disclosure, embodiments of the present invention provide a data synchronization method that matches data held by the battery management system with data held by an upper-level controller.

### [Technical Solution]

In order to achieve the objective of the present disclosure, a data synchronization apparatus according to an embodiment is defined in the appended claims. According to another embodiment of the present disclosure, a data synchronization method is also provided.

### [Advantageous Effects]

According to the embodiment of the present invention as described above, it is possible to prevent the problem of inconsistency between data held by the battery management system and data held by the upper-level controller.

Accordingly, the battery status can be monitored and controlled more accurately in the battery management system and the energy storage system.

### [Brief Description of the Drawings]

FIG. 1 is a block diagram of an example of an energy storage system to which the present invention may be applied.
FIG. 2 is a diagram showing a concept of the communication structure between a battery management apparatus and an inverter according to embodiments of the present invention.
FIG. 3 is an operational flowchart of the BMS data synchronization method according to embodiments of the present invention.
FIG. 4 is a conceptual diagram showing the operation of a network event handler according to embodiments of the present invention.
FIG. 5 is a block diagram of a data synchronization apparatus according to embodiments of the present invention.

- 100:: battery management apparatus (BMS)
- 110:: processor
- 120:: memory
- 130:: transceiver
- 400:: power conversion device/inverter

### [Best Modes for Practicing the Disclosure]

The present invention may be modified in various forms and have various embodiments, and specific embodiments thereof are shown by way of example in the drawings and will be described in detail below. The present invention is defined by the appended claims.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

State of Charge (SOC) refers to a current state of charge of a battery, represented in percent points [%], and State of Health (SOH) may be a current condition of a battery compared to its ideal or original conditions, represented in percent points [%].

A battery rack refers to a system of a structure assembled by connecting module units in series/parallel, module units being set by a battery manufacturer, which can be monitored and controlled by a battery management system (BMS). A battery rack may include several battery modules and a battery protection unit or any other protection device.

A battery bank refers to a group of large-scale battery rack systems configured by connecting several racks in parallel. A bank BMS for a battery bank may monitor and control several rack BMSs, each of which manages a battery rack.

A battery system controller (BSC) refers to a device that controls the topmost level of a battery system including a battery bank level structure or a multiple bank level structure.

A power limit refers to a limit of power that can be output from a battery, which is set in advance by a battery manufacturer based on a battery condition. A rack power limit may mean an output power limit ([kW]) set for a rack level, and can be set based on a SOC and a temperature of the battery.

The power limit can be a charge power limit or a discharge power limit depending on whether charging or discharging is applied. In addition, according to a battery system structure, a rack power limit or a bank power limit may be defined.

Hereinafter, exemplary embodiments of the present invention will be described in detail with reference to the accompanying drawings.

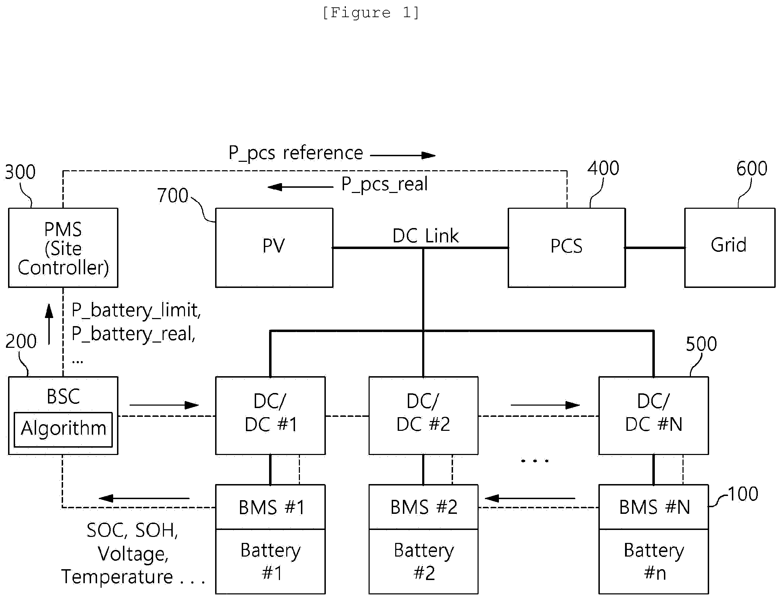

FIG. 1 is a block diagram of an example of an energy storage system to which the present invention may be applied.

FIG. 1 shows an example of a DC coupled system in which the output terminal of a PV (Photovoltaic) system 700 is connected to an output terminal of a DC/DC converter 500 and an input terminal of a PCS 400.

In an energy storage system (ESS), a battery is used for storing energy or power. Typycally, multiple battery packs may form a battery rack and multiple battery racks may form a battery bank. Here, depending on a device or a system in which the battery is used, a battery pack may be referred to as a battery module. Battery #1, battery #2, ... , and battery #N shown in FIG. 1 may be a battery rack.

Referring to FIG. 1, a battery management system (BMS) 100 may be installed for each battery. The BMS 100 may monitor a current, a voltage and a temperature of each battery rack (or pack) to be managed, calculate a state Of charge (SOC) of the battery based on a monitoring result to control charging and discharging. In the instance that each battery in the system of **FIG.** 1 is a battery rack, the BMS 100 may be a rack BMS (RBMS).

Meanwhile, the BMS 100 may include a Micro Controller Unit (MCU) or Battery Monitoring Integrated Chip (BMIC) to control internal components in conjunction with them. Here, the BMIC may be located inside the BMS and may be an IC-type component that measures information such as voltage, temperature, and current of the battery cell/module.

A battery system controller (BSC) 200 may be located in each battery section which includes a plurality of batteries, peripheral circuits, and devices to monitor and control objects such as a voltage, a current, a temperature, and a circuit breaker.

In addition, a power conversion/conditioning system (PCS) 400, which may also be called as an inverter, installed in each battery system may control power supplied from the outside and power supplied from the battery section to the outside. The output of the DC/DC converter 500 may be connected to the PCS 400 and the PCS 400 may be connected to the power grid 600. Here, the PCS 400 typically operates in a constant power mode. A power management system (PMS)/energy management system (EMS) 300 connected to the PCS may control the output of the PCS based on the monitoring and control results of the battery management system or the battery system controller.

In the energy storage system of FIG. 1, battery #1 is connected to DC/DC converter #1, battery #2 is connected to DC/DC converter #2, and battery #N is connected to DC/DC #N. The output of the DC/DC converter corresponding to each battery is connected to the PCS 400 through a DC link.

The DC/DC converter may be a bidirectional converter, wherein when conversion is performed from the battery to the load direction, the input of the DC/DC converter is connected to a battery (a battery unit, a battery rack or a battery pack) and the output of the DC/DC converter may be connected to a load. As examples of the DC/DC converter, various types of converters such as a full-bridge converter, a half-bridge converter, and a flyback converter may be used.

Meanwhile, communication among the BMS 100, the BSC 200, the PMS 300, and the PCS 400 may be implemented through Controller Area Network (CAN) or Ethernet (indicated by a dotted line in FIG. 1).

According to embodiments of the present invention shown in FIG. 1, the BSC 200 which is configured to manage overall control of the battery section may report state information of each battery to the PMS 300. Here, the state informaiton of each battery may include information such as a state of charge (SOC), a state of health (SOH), a voltage, and a temperature of each battery. The BSC 200 may provide information such as power limit (P_battery_limit) and real power (P_battery_real) of each battery to the power management system 300. The power management system 300 in charge of controlling the entire energy storage system may issue a charge command or a discharge command (via P_pcs_reference) to the power conversion system 400 during system operation.

Here, the battery system controller (BSC) 200 determines an output reference for each DC/DC converter in consideration of a state of each battery. In the embodiments according to the present invention, the output reference of an individual DC/DC converter may be set in different ways according to a droop mode or a constant power (CP) mode.

When the output of the DC/DC converter is controlled according to a droop mode, the battery system controller may set a droop curve for each DC/DC converter in consideration of a state of each battery and provide it to a corresponding DC/DC converter before the system operation starts. Meanwhile, when the DC/DC converter operates in a constant power (CP) mode, a power reference of each DC/DC converter may be determined during system operation and provided to a corresponding DC/DC converter.

During an actual operation of the energy storage system, a power management controller (PMS) may transmit a charge/discharge command to the power conversion system and the battery system controller. Here, the power management controller may monitor states of the photovoltaic system (PV), the grid, and the battery in real time, and may determine operating modes and output references of components in the energy storage system based on an operation command received from an EMS (Energy Management System).

Meanwhile, the system in FIG. 1 is only shown as an example of an energy storage system to which the present invention may be applied, and the present invention may be applied to various energy storage systems, such as an AC coupled system in which a DC/AC inverter is connected to a photovoltaic system and a DC/AC inverter is connected to a battery system or an energy storage system that is not connected to a photovoltaic system.

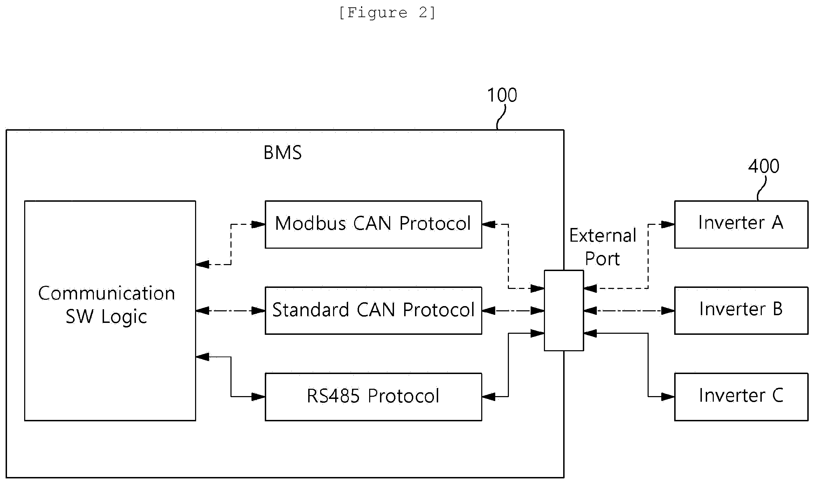

FIG. 2 is a diagram showing a concept of the communication structure between a battery management apparatus and an inverter according to embodiments of the present invention.

As seen through FIG. 1, in the energy storage system, the battery management apparatus (or battery management system (BMS)) 100 may communicate with an upper-level controller, for example, an inverter. Here, the inverter may be the power conversion/conditioning system (PCS) 400 shown in FIG. 1.

The battery management apparatus 100 may include communication protocols such as Modbus CAN protocol, standard CAN protocol, and RS485 protocol and communication software logic for communication with the network including an upper-level controller.

Here, standard CAN protocol refers to a general implementation of a Controller Area Network (CAN), and is generally widely used in the automotive industry and various other industrial applications.

Standard CAN is a communication system based on a CAN bus that allows data to be transmitted and received between multiple devices quickly and reliably. Standard CAN protocol supports reliable communication by dividing data into packets and providing priority-based collision avoidance, error detection, and recovery functions. Standard CAN offers flexibility in terms of data transmission rate and capacity and typically operates at speeds of up to 1 Mbps.

Meanwhile, Modbus CAN is a combination of the Modbus protocol and the CAN bus, which is a method of transmitting Modbus commands over a CAN network, and is especially useful in industrial automation systems. Modbus CAN facilitates communication between existing Modbus-based devices and CAN bus based systems. Modbus CAN allows communication over the CAN bus while maintaining the functionality and the data format of the Modbus protocol.

Meanwhile, RS485 is a serial communication interface used as a multidrop bus standard and supports data transmission by connecting multiple devices to one bus. RS485 is widely used in a variety of applications, including industrial automation, control systems, and network communications.

The data which is processed to match various communication protocols may be transmitted to one or more inverters 400 through input/output ports. Here, as shown in FIG. 2, multiple inverters may be matched to one BMS, and various protocols such as standard CAN, Modbus CAN, and RS485 may be used depending on the inverter specifications. In order to respond to multiple communication protocols, the BMS may perform a function of processing BMS data at a specific cycle to suit each communication protocol standard.

The communication protocol shown in FIG. 2 is presented only as an example of supporting communication between the battery management apparatus and the upper-level system (inverter or other devices in the network), and thus, the present invention does not exclude other communication protocols.

The battery management apparatus may measure cell data at regular intervals using a battery monitoring integrated chip (BMIC), process the measured cell data into network data, and transmit the network data to the upper-level controller. In general, data synchronization is achieved between the BMS data held by the battery management apparatus and the BMS data held by the upper-level controller since the battery management apparatus transmits and receives data at certain time points according to a certain cycle.

However, there may be cases where the battery management apparatus receives a request for battery data from the inverter while data to be transmitted in the corresponding cycle is not defined yet. In this case, the battery management apparatus delivers network data defined in a previous cycle (for example, 1 second ago if the cycle is 1 second) to the inverter. As a result, data inconsistency occurs between the battery management apparatus and the inverter, and a problem arises in that analysis and fault diagnosis may be performed in the upper-level controller based on inaccurate battery status-related data.

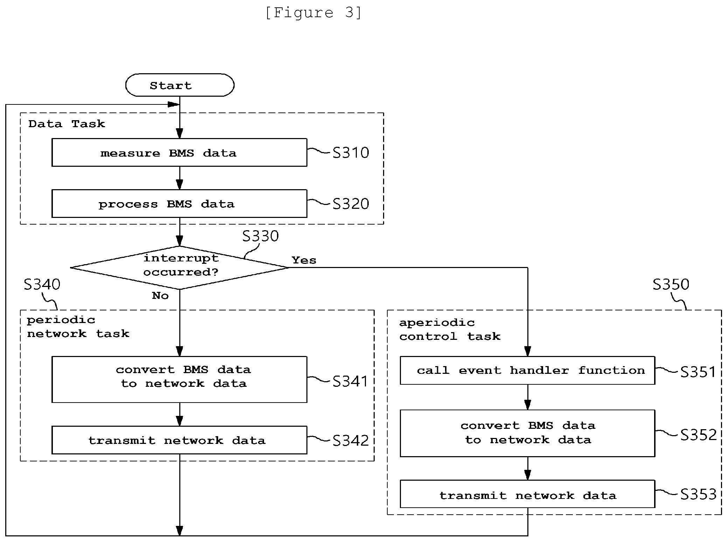

FIG. 3 is an operational flowchart of the BMS data synchronization method according to embodiments of the present invention.

The BMS data synchronization method shown in FIG. 3 may be performed by a battery management apparatus, a control unit within the battery management apparatus, or a controller.

Referring to FIG. 3, the battery management apparatus may measure battery status-related BMS data according to a periodic data task processing procedure (S310) and process the measured BMS data (S320). Here, processing of the measured BMS data may include, for example, converting analog measurement values into digital values, adjusting the size or format of data in a form appropriate for analysis or transmission, etc.

Afterwards, before converting the BMS data into network data, when the BMS data request is received from the network, which is when an interrupt occurs (example in S330), the scheduled periodic network task may not be performed and the aperiodic control task is performed (S350).

More specifically, the battery management apparatus may call an event handler function related to the BMS data request (S351), perform an operation related to the BMS data request event, convert the BMS data to network data, so as to synchronizes the network data (S352). The synchronized network data may be transmitted to the network using each communication protocol (S353).

Here, in the step of synchronizing the network data (S352), the network data of one or more related communication protocols in the BMS may be updated using the called event handler function. Here, updating network data may mean converting recent BMS data measured and processed by a data task into network data according to a related communication protocol.

Here, the communication protocol may include one or more of the Modbus CAN protocol, Standard CAN protocol, and rs485 protocol.

Meanwhile, if no interrupt occurs because the BMS data request is not received from the network (No in S330), a periodic network task performed according to a predetermined period is performed (S340). In other words, the BMS data may be converted into network data according to the related communication protocol (S341), and the network data of one or more related communication protocols in the BMS is updated. Thereafter, the updated network data may be transmitted to an upper-level controller (e.g., a power conversion device or inverter in an energy storage system) within the network that has requested the data (S342).

The data tasks (S310, S320) and the periodic network task (S340) shown in FIG. 3 may be repeatedly performed at regular intervals. On the other hand, the aperiodic control task (S350) may be performed only when a request occurs from the network or an upper-level controller within the network.

Meanwhile, although not shown in FIG. 3, when the time of updating the network data of one or more communication protocols according to a preset cycle and the time of occurrence of the BMS data request event coincide, operations according to the call of an event handler function processed through the control task are performed first.

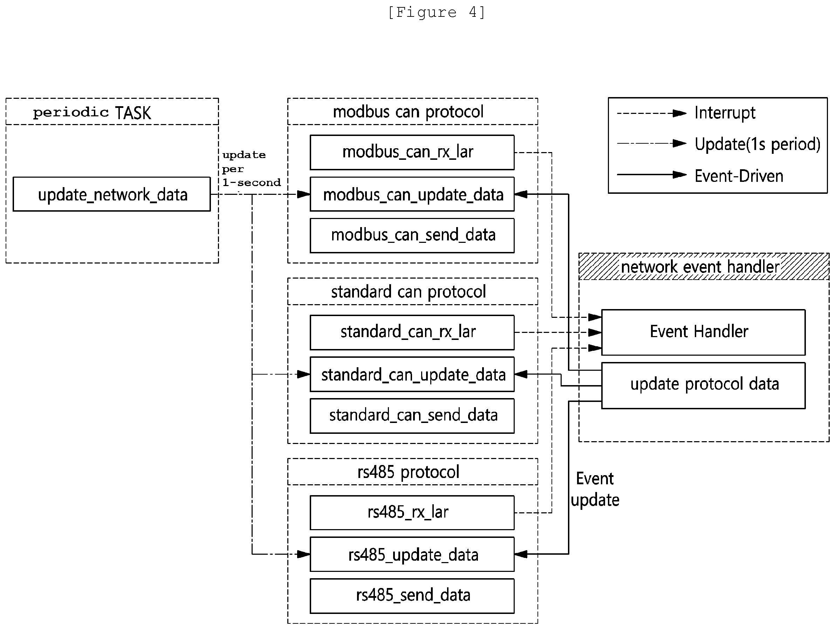

FIG. 4 is a conceptual diagram showing the operation of a network event handler according to embodiments of the present invention.

As described above, the communication protocol according to embodiments of the present invention may include the Modbus CAN protocol, the standard CAN protocol, and the rs485 protocol, and each protocol may execute xxx_rx_isr function, xxx_update_data function, and xxx_send_data function.

Here, the xxx_rx_isr function may receive a read/write request for BMS data and process the requested service. The request may include periodic requests and aperiodic requests. Furthermore, the xxx_update_data function within each protocol may convert BMS data into network data according to each communication protocol. The xxx_send_data function may transmit updated network data to an upper-level controller.

In a state where no interrupt occurs, the modbus_can_update_data function of the Modbus CAN protocol, the standard_can_update_data function of the standard CAN protocol, and the rs485_update_data function of the rs485 protocol may be called, respectively by a command from a periodically performed network task (e.g., 1-second periodic update command in FIG. 4). Network data for each protocol may be updated by executing the update function and the updated data may be transmitted to the upper-level controller through the xxx_send_data function.

Meanwhile, in addition to periodically performed network tasks, when a read/write request for BMS data is received from an inverter through an external communication port (i.e., when an interrupt occurs), the battery management apparatus should immediately return the requested data. For this, the battery management apparatus may register the BMS data request from the inverter in an event format, and upon a pre-registered event occurring, the battery management apparatus may call an event handler function to process the corresponding event to synchronize the current BMS data and network data.

Referring to FIG. 4, when an aperiodic request from the upper-level controller is received through the xxx_rx_isr function in each protocol, the event handler function included in the network event handler may be called. Next, the xxx_update_data function within each protocol may be called by the update protocol data function, thereby converting the BMS data into network data. The converted and processed network data may be delivered to the upper-level controller that requested the data.

Meanwhile, when the update function within each protocol is called simultaneously by the periodic update and the inverter interrupt, the order of operations may be determined by considering task priority. Event handlers are processed by control tasks and control tasks have a higher priority over network tasks, so protocol updates called by event handlers may be performed before periodic update operations. Accordingly, the protocol update is performed by the control task and the update sequence by the network task is not performed to prevent duplication.

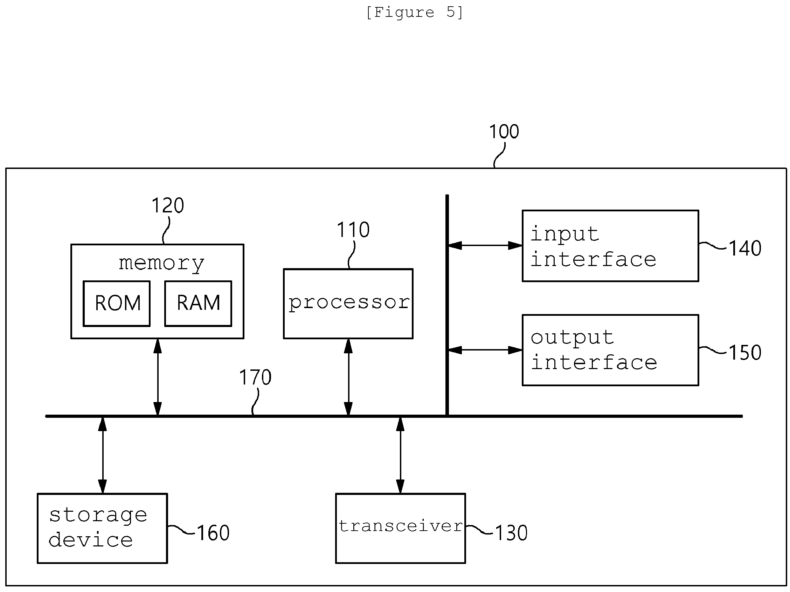

FIG. 5 is a block diagram of a data synchronization apparatus according to embodiments of the present invention.

The data synchronization apparatus 100 may include at least one processor 110, a memory 120 that stores at least one command executed through the processor, and a communication module 130 that is connected to the network and performs communication. Here, the data synchronization apparatus 100 may be a battery management apparatus (BMS) located within an energy storage system.

Here, the at least one processor may be referred to as a control unit, controller, MCU, etc. The processor may be a central processing unit (CPU), a graphics processing unit (GPU), or a dedicated processor on which methods according to embodiments of the present invention are performed. Additionally, the processor 110 may be provided in the form of a Battery Monitoring Integrated Chip (BMIC).

Meanwhile, the at least one instruction executed by the at least one processor may include: an instruction to measure battery status-related Battery Management System (BMS) data according to a predetermined cycle; an instruction to process the BMS data measured according to the predetermined cycle; an instruction to, upon receiving a request for the BMS data from the network before converting the BMS data to network data, generate an event related to the BMS data request; an instruction to synchronize the network data by performing an operation corresponding to the event related to the BMS data request; and an instruction to transmit the network data to the network.

The instruction to synchronize the network data may include an instruction to call an event handler function corresponding to the BMS data request; and an instruction to update the network data for one or more communication protocols using the called event handler function.

The communication protocol may include one or more of the Modbus Controller Area Network (CAN) protocol, Standard CAN protocol, and rs485 protocol.

The at least one instruction further includes, upon not receiving the BMS data request from the network, an instruction to perform periodic network tasks according to the predetermined period, an instruction to convert the BMS data into network data according to a corresponding communication protocol to update the network data of the one or more communication protocols; and an instruction to transmit the updated network data to the network.

Meanwhile, the at least one instruction further includes, in the instance that the time of updating the network data of one or more communication protocols according to the predetermined period and the time when the event related to the BMS data request occurs coincide, an instruction to preferentially perform the operation corresponding to the call of the event handler function which is to be processed through a control task.

The network may include a power conversion device (inverter) in an energy storage system.

Meanwhile, the data synchronization apparatus 100 according to embodiments of the present invention may further include an input interface device 140, an output interface device 150, a storage device 160, etc. Respective components included in the data synchronization apparatus 100 may be connected by a bus 170 and can communicate with each other.

The processor 110 may execute a program instruction stored in at least one of the memory 120 and the storage device 160. The memory (or storage device) may be configured as at least one of a volatile storage medium and a non-volatile storage medium. For example, the memory may be configured as at least one of a read only memory (ROM) and a random access memory (RAM).

The operations of the method according to the embodiments of the present invention may be implemented as a computer-readable program or code on a computer-readable recording medium. The computer-readable recording medium may include all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

## Claims

1. A data synchronization apparatus (100) comprising:
at least one processor (110); and
a memory (120) configured to store at least one instruction executed by the at least one processor (110),
wherein the at least one instruction includes:
an instruction to measure (S310) battery status-related Battery Management System,BMS, data according to a predetermined cycle;
an instruction to process (S320) the BMS data measured according to the predetermined cycle;
an instruction to, upon occurrence of an interrupt by receiving a request for the BMS data from a network before converting the BMS data to network data, generate (S351) an event related to the BMS data request;
an instruction to performan aperiodic control task (S350) by performing an operation corresponding to the event related to the BMS data request to synchronize the network data with the BMS data; and
an instruction to transmit (S535) the network data to the network.

2. The apparatus of claim 1, wherein the instruction to perform the aperiodic control task (S350) includes:
an instruction to call an event handler function corresponding to the BMS data request; and
an instruction to update the network data for one or more communication protocols using the called event handler function.

3. The apparatus of claim 2, wherein the one or more communication protocols include one or more of a Modbus Controller Area Network (CAN) protocol, a Standard CAN protocol, and a rs485 protocol.

4. The apparatus of claim 1, wherein the at least one instruction further includes:
upon not receiving the BMS data request from the network,
an instruction to perform (S340) periodic network tasks according to the predetermined cycle,
an instruction to convert (S341) the BMS data into the network data according to a corresponding communication protocol to update the network data of one or more communication protocols; and
an instruction to transmit (S342) the updated network data to the network.

5. The apparatus of claim 4, wherein the at least one instruction further includes:
in an instance that a time of updating the network data of the one or more communication protocols according to the predetermined cycle and a time when the event related to the BMS data request occurs coincide,
an instruction to preferentially perform the operation corresponding to a call of an event handler function which is processed through a control task.

6. The apparatus of claim 1, wherein the network includes a power conversion device (400) in an energy storage system.

7. A data synchronization method comprising:
measuring (S310) battery status-related Battery Management System (BMS) data according to a predetermined cycle;
processing (S320) the BMS data measured according to the predetermined cycle;
upon occurrence of an interrupt by receiving (S330) a request for the BMS data from a network before converting the BMS data to network data, generating (S351) an event related to the BMS data request;
performing aperiodic control task (S350) by performing an operation corresponding to the event related to the BMS data request; and
transmitting (S353) the network data to the network to synchronize the network data with the BMS data; and
transmitting (S353) the network data to the network.

8. The method of claim 7, wherein the performing of the aperiodic control task (S350) includes:
calling (S351) an event handler function corresponding to the BMS data request; and
updating the network data for one or more communication protocols using the called event handler function.

9. The method of claim 8, wherein the one or more communication protocols include one or more of a Modbus Controller Area Network (CAN) protocol, a Standard CAN protocol, and a rs485 protocol.

10. The method of claim 8, further comprising:
upon not receiving the BMS data request from the network,
performing periodic network tasks according to the predetermined cycle;
converting the BMS data into the network data according to a corresponding communication protocol to update the network data of the one or more communication protocols; and
transmitting the updated network data to the network.

11. The method of claim 10, further comprising:
in an instance that a time of updating the network data of the one or more communication protocols according to the predetermined cycle and a time when the event related to the BMS data request occurs coincide,
preferentially performing the operation corresponding to the call of the event handler function which is processed through a control task.

12. The method of claim 7, wherein the network includes a power conversion device (400) in an energy storage system.

## Patentansprüche

1. Datensynchronisationsvorrichtung (100), umfassend:
• mindestens einen Prozessor (110); und
• einen Speicher (120), der so konfiguriert ist, dass er mindestens eine Anweisung speichert, die von dem mindestens einen Prozessor (110) ausgeführt wird,
• wobei die mindestens eine Anweisung einschließt:
• eine Anweisung zum Messen (S310) von batteriezustandsbezogenen Batteriemanagementsystem, BMS,-Daten gemäß einem vorbestimmten Zyklus;
• eine Anweisung zum Verarbeiten (S320) der gemäß dem vorbestimmten Zyklus gemessenen BMS-Daten;
• eine Anweisung zum Erzeugen (S351) eines auf die BMS-Datenanforderung bezogenen Ereignisses bei Auftreten eines Interrupts durch Empfangen einer Anforderung der BMS-Daten von einem Netzwerk vor dem Konvertieren der BMS-Daten in Netzwerkdaten;
• eine Anweisung zum Durchführen einer aperiodischen Steuerungsaufgabe (S350) durch Durchführen einer Operation, die dem auf die BMS-Datenanforderung bezogenen Ereignis entspricht, um die Netzwerkdaten mit den BMS-Daten zu synchronisieren; und
• eine Anweisung zum Übertragen (S535) der Netzwerkdaten an das Netzwerk.

2. Vorrichtung nach Anspruch 1, wobei die Anweisung zum Durchführen der aperiodischen Steuerungsaufgabe (S350) einschließt:
• eine Anweisung zum Aufrufen einer der BMS-Datenanforderung entsprechenden Ereignis-Handler-Funktion; und
• eine Anweisung zum Aktualisieren der Netzwerkdaten für ein oder mehrere Kommunikationsprotokolle unter Verwendung der aufgerufenen Ereignis-Handler-Funktion.

3. Vorrichtung nach Anspruch 2, wobei das eine oder die mehreren Kommunikationsprotokolle eines oder mehrere von einem Modbus-Controller-Area-Network(CAN)-Protokoll, einem Standard-CAN-Protokoll und einem rs485-Protokoll einschließen.

4. Vorrichtung nach Anspruch 1, wobei die mindestens eine Anweisung ferner einschließt:
• bei Nichtempfangen der BMS-Datenanforderung von dem Netzwerk, eine Anweisung zum Durchführen (S340) periodischer Netzwerkaufgaben gemäß dem vorbestimmten Zyklus,
• eine Anweisung zum Konvertieren (S341) der BMS-Daten in die Netzwerkdaten gemäß einem entsprechenden Kommunikationsprotokoll, um die Netzwerkdaten eines oder mehrerer Kommunikationsprotokolle zu aktualisieren; und
• eine Anweisung zum Übertragen (S342) der aktualisierten Netzwerkdaten an das Netzwerk.

5. Vorrichtung nach Anspruch 4, wobei die mindestens eine Anweisung ferner einschließt:
• in einem Fall, in dem ein Zeitpunkt des Aktualisierens der Netzwerkdaten des einen oder der mehreren Kommunikationsprotokolle gemäß dem vorbestimmten Zyklus und ein Zeitpunkt, zu dem das auf die BMS-Datenanforderung bezogene Ereignis auftritt, zusammenfallen,
• eine Anweisung zum vorzugsweisen Durchführen der Operation, die dem Aufruf der Ereignis-Handler-Funktion entspricht, welche über eine Steuerungsaufgabe verarbeitet wird.

6. Vorrichtung nach Anspruch 1, wobei das Netzwerk eine Leistungsumwandlungsvorrichtung (400) in einem Energiespeichersystem einschließt.

7. Datensynchronisationsverfahren, umfassend:
• Messen (S310) von batteriezustandsbezogenen Batteriemanagementsystem(BMS)-Daten gemäß einem vorbestimmten Zyklus;
• Verarbeiten (S320) der gemäß dem vorbestimmten Zyklus gemessenen BMS-Daten;
• bei Auftreten eines Interrupts durch Empfangen (S330) einer Anforderung der BMS-Daten von einem Netzwerk vor dem Konvertieren der BMS-Daten in Netzwerkdaten, Erzeugen (S351) eines auf die BMS-Datenanforderung bezogenen Ereignisses;
• Durchführen einer aperiodischen Steuerungsaufgabe (S350) durch Durchführen einer Operation, die dem auf die BMS-Datenanforderung bezogenen Ereignis entspricht; und
• Übertragen (S353) der Netzwerkdaten an das Netzwerk, um die Netzwerkdaten mit den BMS-Daten zu synchronisieren; und
• Übertragen (S353) der Netzwerkdaten an das Netzwerk.

8. Verfahren nach Anspruch 7, wobei das Durchführen der aperiodischen Steuerungsaufgabe (S350) einschließt:
• Aufrufen (S351) einer der BMS-Datenanforderung entsprechenden Ereignis-Handler-Funktion; und
• Aktualisieren der Netzwerkdaten für ein oder mehrere Kommunikationsprotokolle unter Verwendung der aufgerufenen Ereignis-Handler-Funktion.

9. Verfahren nach Anspruch 8, wobei das eine oder die mehreren Kommunikationsprotokolle eines oder mehrere von einem Modbus-Controller-Area-Network(CAN)-Protokoll, einem Standard-CAN-Protokoll und einem rs485-Protokoll einschließen.

10. Verfahren nach Anspruch 8, ferner umfassend:
• bei Nichtempfangen der BMS-Datenanforderung von dem Netzwerk, Durchführen periodischer Netzwerkaufgaben gemäß dem vorbestimmten Zyklus;
• Konvertieren der BMS-Daten in die Netzwerkdaten gemäß einem entsprechenden Kommunikationsprotokoll, um die Netzwerkdaten des einen oder der mehreren Kommunikationsprotokolle zu aktualisieren; und
• Übertragen der aktualisierten Netzwerkdaten an das Netzwerk.

11. Verfahren nach Anspruch 10, ferner umfassend:
• in einem Fall, in dem ein Zeitpunkt des Aktualisierens der Netzwerkdaten des einen oder der mehreren Kommunikationsprotokolle gemäß dem vorbestimmten Zyklus und ein Zeitpunkt, zu dem das auf die BMS-Datenanforderung bezogene Ereignis auftritt, zusammenfallen,
• vorzugsweises Durchführen der Operation, die dem Aufruf der Ereignis-Handler-Funktion entspricht, welche über eine Steuerungsaufgabe verarbeitet wird.

12. Verfahren nach Anspruch 7, wobei das Netzwerk eine Leistungsumwandlungsvorrichtung (400) in einem Energiespeichersystem einschließt.

## Revendications

1. Un appareil de synchronisation de données (100) comprenant :
au moins un processeur (110) ; et
une mémoire (120) configurée pour stocker au moins une instruction exécutée par l'au moins un processeur (110),
dans lequel l'au moins une instruction comprend :
une instruction pour mesurer (S310) des données de système de gestion de batterie, BMS, associées à un état de batterie selon un cycle prédéterminé ;
une instruction pour traiter (S320) les données de BMS mesurées selon le cycle prédéterminé ;
une instruction pour, lors de la survenue d'une interruption par réception d'une demande pour les données de BMS en provenance d'un réseau avant la conversion des données de BMS en données de réseau, générer (S351) un événement associé à la demande de données de BMS ;
une instruction pour exécuter une tâche de commande apériodique (S350) en exécutant une opération correspondant à l'événement associé à la demande de données de BMS pour synchroniser les données de réseau avec les données de BMS ; et
une instruction pour transmettre (S535) les données de réseau au réseau.

2. L'appareil selon la revendication 1, dans lequel l'instruction pour exécuter la tâche de commande apériodique (S350) comprend :
une instruction pour appeler une fonction de gestionnaire d'événements correspondant à la demande de données de BMS ; et
une instruction pour mettre à jour les données de réseau pour un ou plusieurs protocoles de communication à l'aide de la fonction de gestionnaire d'événements appelée.

3. L'appareil selon la revendication 2, dans lequel le ou les protocoles de communication comprennent un ou plusieurs parmi un protocole Modbus Controller Area Network (CAN), un protocole CAN standard et un protocole rs485.

4. L'appareil selon la revendication 1, dans lequel l'au moins une instruction comprend en outre :
lors de la non-réception de la demande de données de BMS en provenance du réseau, une instruction pour exécuter (S340) des tâches de réseau périodiques selon le cycle prédéterminé,
une instruction pour convertir (S341) les données de BMS en les données de réseau selon un protocole de communication correspondant pour mettre à jour les données de réseau d'un ou plusieurs protocoles de communication ; et
une instruction pour transmettre (S342) les données de réseau mises à jour au réseau.

5. L'appareil selon la revendication 4, dans lequel l'au moins une instruction comprend en outre :
dans un cas où un moment de mise à jour des données de réseau du ou des protocoles de communication selon le cycle prédéterminé et un moment où survient l'événement associé à la demande de données de BMS coïncident,
une instruction pour préférentiellement exécuter l'opération correspondant à l'appel de la fonction de gestionnaire d'événements qui est traité par le biais d'une tâche de commande.

6. L'appareil selon la revendication 1, dans lequel le réseau comprend un dispositif de conversion de puissance (400) dans un système de stockage d'énergie.

7. Un procédé de synchronisation de données comprenant :
mesurer (S310) des données de système de gestion de batterie (BMS) associées à un état de batterie selon un cycle prédéterminé ;
traiter (S320) des données de BMS mesurées selon le cycle prédéterminé ;
lors de la survenue d'une interruption par réception (S330) d'une demande pour les données de BMS en provenance d'un réseau avant la conversion des données de BMS en données de réseau, générer (S351) un événement associé à la demande de données de BMS ;
exécuter une tâche de commande apériodique (S350) en exécutant une opération correspondant à l'événement associé à la demande de données de BMS pour synchroniser les données de réseau avec les données de BMS ; et
transmettre (S353) les données de réseau au réseau pour synchroniser les données de réseau avec les données de BMS ; et
transmettre (S353) des données de réseau au réseau.

8. Le procédé selon la revendication 7, dans lequel l'exécution de la tâche de commande apériodique (S350) comprend :
appeler (S351) une fonction de gestionnaire d'événements correspondant à la demande de données de BMS ; et
mettre à jour des données de réseau pour un ou plusieurs protocoles de communication à l'aide de la fonction de gestionnaire d'événements appelée.

9. Le procédé selon la revendication 8, dans lequel le ou les protocoles de communication comprennent un ou plusieurs parmi un protocole Modbus Controller Area Network (CAN), un protocole CAN standard et un protocole rs485.

10. Le procédé selon la revendication 8, comprenant en outre :
lors de la non-réception de la demande de données de BMS en provenance du réseau, exécuter des tâches de réseau périodiques selon le cycle prédéterminé ;
convertir les données de BMS en les données de réseau selon un protocole de communication correspondant pour mettre à jour les données de réseau du ou des protocoles de communication ; et
transmettre les données de réseau mises à jour au réseau.

11. Le procédé selon la revendication 10, comprenant en outre :
dans un cas où un moment de mise à jour des données de réseau du ou des protocoles de communication selon le cycle prédéterminé et un moment où survient l'événement associé à la demande de données de BMS coïncident,
préférentiellement exécuter l'opération correspondant à l'appel de la fonction de gestionnaire d'événements qui est traité par le biais d'une tâche de commande.

12. Le procédé selon la revendication 7, dans lequel le réseau comprend un dispositif de conversion de puissance (400) dans un système de stockage d'énergie.
